# EUROPEAN PATENT SPECIFICATION

(11) **EP 3 870 622 B1**
(45) Date of publication and mention of the grant of the patent: **04.11.2026**
(21) Application number: 19783831.1
(22) Date of filing: 24.09.2019
(51) Int. Cl.: A01P 1/00, A01P 3/00, A01N 43/80, A01N 25/02, C08G 18/00

(54) **WOOD PRESERVATIVES**
HOLZKONSERVIERUNGSMITTEL
AGENTS DE CONSERVATION DU BOIS

(30) Priority: 28.09.2018 US 201862738459 P
(43) Date of publication of application: 01.09.2021
(73) Proprietor: Nutrition & Biosciences USA 2, LLC, Pittsburgh, PA 15275-1112 (US)
(72) Inventor: ARUMUGAM, Selvanathan, Wilmington, Delaware 19803 (US); LAGANELLA, David, Wilmington, Delaware 19803 (US); STEPHENS, Randall Wayne, Wilmington, Delaware 19803 (US)
(74) Representative: Mann, Georgia
(86) International application number: PCT/US2019/052596
(87) International publication number: WO 2020/068747

(56) References cited:
- EP-A1- 1 714 757
- WO-A1-03/054046
- WO-A1-2004/018171
- WO-A1-2008/078720
- WO-A1-2018/183615
- WO-A1-97/02134
- CN-A- 107 660 218
- US-A- 5 023 309
- US-A1- 2011 098 417
- US-B2- 11 930 817

## Description

The present invention relates to a wood preservative composition and method for preserving wood to impart protection from wood-decaying organisms.

There are many methods and compositions for preserving wood prior to the time the wood is put in use. Also, preservatives for treating wood in place are available on the market including both oil-based and water-based products. The oil-based products generally consist of petroleum oils with pentachlorophenol or creosote. US 7,959,723 describes one such composition employing oil-soluble preservatives for wood. From the standpoint of toxicity and environmental pollution, these active ingredients are less than desirable.

WO 2008/078720 discloses a wood preservative agent for antiseptic purposes.

WO 97/02134 discloses polyurethane impregnated wood having improved impact resistance or toughness.

EP-A-1714757 discloses an aqueous wood preservative composition comprising (a) an aqueous polymer dispersion having an average particle size less than 1000 nm, in which the polymer has a Tg less than 75°C; (b) at least one surfactant selected from among nonionic and anionic surfactants; and (c) at least one wood preservative active selected from halogenated isothiazolone biocides, halogenated carbamate fungicides and azole fungicides.

The problem addressed by this invention is the need for a more environmentally friendly wood treatment composition which is capable of efficaciously imparting active ingredients.

The present invention is directed to a method for preserving wood comprising contacting wood with a wood preservation composition comprising
a) a polyurethane polymer synthesized from a polyol comprising >95% p-propylene oxide; an isocyanate, and a capping agent; b) diesel; and
c) at least one wood preservative active which is 4,5-dichloro-2-n-octyl-4-isothiazolin-3-one; wherein the capping agent is selected from the group consisting of a mono alcohol with alkyl chains greater than or equal to C5 and a secondary amine with alkyl chains greater than or equal to C14 capping agents and mixtures thereof; and further wherein the molecular weight of the polyol is greater than or equal to 2000.

The present invention is further directed to a wood preservation composition comprising a) a polyurethane polymer synthesized from a polyol comprising >95% p-propylene oxide; an isocyanate, and a capping agent; b) diesel; and c) at least one wood preservative active which is 4,5-dichloro-2-n-octyl-4-isothiazolin-3-one; wherein the capping agent is selected from the group consisting of a mono alcohol with alkyl chains greater than or equal to C5 and a secondary amine with alkyl chains greater than or equal to C14 capping agents and mixtures thereof; and further wherein the molecular weight of the polyol is greater than or equal to 2000.

All percentages and part per million (ppm) values are on the basis of total weight of the composition, unless otherwise indicated. The terms "a" or "an" refer both to the singular case and the case where more than one exists. All range endpoints are inclusive and combinable. As contained herein all molecular weights are number average molecular weight and are determined by Gel Permeation Chromatography (GPC). It is envisioned that one skilled in the art could select and/or combine multiple suitable and/or preferred embodiments in the present invention.

The wood preservative compositions of the present invention comprise polyurethane polymers that are synthesized from bis hydroxy terminated polypropylene oxide macromere (polyol), an isocyanate, and an appropriate capping agent. Polyurethane polymers, as used herein, may contain other functional groups derived from reaction of isocyanates with other monomers, e.g., amide groups derived from carboxylic acids, and ureas derived from amines, e.g. ethylene diamine (EDA) or other polymers, such as polyesters, e.g., polyesters derived from adipic acid and 1,6-hexanediol, 1,4-butanediol and/or neopentyl glycol, or polycarbonates, e.g. polycarbonates derived from poly 1,6-hexanediol carbonate. Suitable isocyanates include, e.g., methylene bis(4-cyclohexylisocyanate) (MCI), methylene bis(4-phenylisocyanate) (MDI), polymethylenepolyphenol isocyanate (pMDI), hexamethylene diisocyanate (HDI), isophorone diisocyanate (IPDI) and toluene diisocyanate (TDI) and combinations thereof. Preferably, the isocyanates of the present invention are diisocyanates. Examples of suitable diisocyanates include IPDI, pMDI, MDI and combinations thereof. More preferably, the diisocyanate is IPDI. The polyol used to make the polyurethane in the present invention is >95% p-propylene oxide having a molecular weight greater than or equal to 2000. Suitably the isocyanate to polyol molar ratio of the polyurethane polymers is from less than 4 to greater than or equal to 1.05, alternatively from less than or equal to 2 to greater than or equal to 1.05.

Polyurethane polymers of the present invention are capped. According to the present invention, the capping agent is an amine or alcohol. Specifically, the capping agent is at least one of a mono secondary alkyl amine or mono alcohol. In accordance with the present invention, mono alcohols with alkyl chains greater than or equal to C5 and secondary amines with alkyl chains greater than or equal to C14 are suitable and mixtures thereof. The polyurethane polymer is synthesized in a non-aqueous solvent or a mixture of non-aqueous solvents. Preferably, the amount of solvent is from 60% to 90%, more preferably from 70% to 90%, and most preferably from 75% to 90%. A suitable mixture of non-aqueous solvents useful in the present invention is Aromatic 200 (CAS No. 64742-94-5).

The wood treatment composition of the present invention, in addition to polyurethane polymer, further comprises a wood preservative active. The wood preservative active is preferably 4,5-dichloro-2-n-octyl-4-isothiazolin-3-one ("DCOIT"). Mixtures of wood preservatives actives may be used. When the polyurethane polymer is combined with DCOIT a suitable composition includes 23% polyurethane polymer solids, 23% DCOIT, and 54% Aromatic 200.

The composition used to treat wood preferably contains from 100 ppm to 40,000 ppm wood preservative, more preferably from 200 ppm to 30,000 ppm, and most preferably from 300 ppm to 25,000 ppm. Preferably, the polymer solids content of the composition is from 10% to 40%, more preferably from 10% to 30%, and most preferably from 15% to 30%. Preferably, the polymer solids to biocide ratio is from 2:1 to 1:2, more preferably from 2:1 to 1:1.

Another critical element of the wood preservation composition is an organic solvent, that is diesel.

The polyurethane polymer is diluted with organic solvent. As used herein, diesel is defined as the fractional distillation of crude oil between 200 °C (392 °F) and 350 °C (662 °F) at atmospheric pressure, resulting in a mixture of carbon chains that typically contain between 8 and 21 carbon atoms per molecule or biodiesel that is obtained from vegetable oil or animal fats (biolipids) which have been transesterified with methanol (fatty-acid methyl ester (FAME)) and mixtures thereof.

The compositions used in the present invention may optionally contain additional components including but not limited to stabilizers, dyes, water repellents, other wood biocides, fungicides and insecticides, antioxidants, metal chelators, radical scavengers, etc. Stabilizers include, e.g., organic and inorganic UV stabilizers, such as, copper oxide or other copper salts or complexes that resist leaching; zinc oxide; iron salts, iron oxide, iron complexes, transparent iron oxide and nanoparticle iron oxide; titanium dioxide; benzophenone and substituted benzophenones; cinnamic acid and its esters and amides; substituted triazines, such as triphenyl triazine and substituted phenyl triazine UV absorbers, benzotriazole and substituted benzotriazole UV absorbers; hindered amine light stabilizers, used individually or in combination. Water repellents include, e.g., various wax-type water repellents, e.g., paraffin, carnauba, and polyethylene waxes; and silicones. Other wood biocides, fungicides, such as copper metal, bethoxazin and cyproconazole, chlorothalonil, tebuconazole, propiconazole, pentachlorophenol, creosote, copper napthenate, dialkyl dimethyl quaternary ammonium carbonate/bicarbonate, and insecticides include, e.g., those listed in U.S. Pat. No. 6,610,282, e.g., imidacloprid, thiacloprid, permethrin, and etofenprox. Antioxidants include any commercially available antioxidant compounds, e.g., phosphite antioxidants such as IRGAFOS; lactone antioxidants; phenolic antioxidants such as BHT; ascorbic acid; and IRGANOX and the like. Metal chelators include, e.g., EDTA, NTA, 1,10-phenanthroline, ACUMER 3100, DEQUEST, TAMOL 731, tripolyphosphate and other inorganic and organic compounds and polymers useful in chelating or dispersing metal salts. Radical scavengers include, e.g., TEMPO.

Preservation of wood is performed by contacting the wood with the wood preservation composition described herein, preferably under conditions that comply with AWPA Standards T1-16 and meet conditions for use specified in U1-16. In order to provide long term protection, the preservative needs to "fix" in the wood and not deplete too rapidly by volatilization or by leaching when the wood gets wet. It might be expected that enhanced penetration or enhanced movement of the preservative deep into the wood during treatment might also lead to reduced fixation of the organic wood preservative active.

### EXAMPLES

### Synthesis of Polyurethane Polymers:

The following polyurethanes were synthesized from a bis hydroxy terminated polypropylene oxide (polyol) and a diisocyanate (IPDI). 150 mL of anhydrous polypropylene oxide in aromatic 200 (solvent, 10-30wt% solution), diisocyanate (2 molar equivalents of isocyanates to hydroxyl groups), was charged with 0.003% of a tin catalyst (dibutyltin dilaurate) to the reactor. A polyol having a molecular weight of 2000 was tested. The reactor was heated to 90°C with overhead stirring. The reaction mixture was held at 90°C for 1h.

The residual isocyanate, in the polyurethane capped examples, is measured using Surface SWYPE^{™} test strips. The reaction product was cooled to room temperature and the capping reagent, mono amine (1 equivalent amine to unreacted isocyanate) was added to cap the remaining isocyanate groups in the reaction mixture. Alternatively, when mono alcohol (1 equivalent hydroxyl to unreacted isocyanate) was used as the capping reagent it was added at 90°C and reacted for an additional 1h at 90°C. The reaction is continued at 90°C until no free isocyanate was observed when tested with SWYPE^{™} test strips. The polymer solids of the PU solution was estimated from the conversion and the amount of reactants used for the reaction. The polymer solids are calculated as the sum of the reactive components in the synthesis of the polymer.

### Procedure to Determine Diesel Compatibility:

In a clear, 1oz vial, 0.1 gram of the polymer (on a 100% polymer solids basis) is diluted with 9.9 grams of diesel fuel (weight/weight) to a 1% solution of the polymer. The sample is maintained at room temperature for 48 hours. After 48 hours, the solution is checked for incompatibility, defined as phase separation, precipitation of the polymer as solids, and/or turbidity.

### Calculations of Hansen Solubility Parameters:

Hansen solubility parameters (HSP) for the various polyurethane end cap segments were computed using HSPiP software (Purchased from https://www.hansen-solubility.com/). Predicted HSPs (using the Y-MB method), namely, the HSP for the dispersion (D), polar (P), and hydrogen bonding (H) contributions (all SP in MPa1/2), the total SP (calculated using the predicted HSP), and "End cap distance from diesel" were computed. According to the HSP theory, the distance between two materials is a measure of the solubility. The smaller the distance the more soluble the fluids are within one another. HSP data for a "diesel" was obtained from the literature (Batista et al. J. Am. Oil Chem. Soc. V92, 95, 2015). ${δ}_{T} = \sqrt{{δ}_{D}^{2} + {δ}_{P}^{2} + {δ}_{H}^{2}}$ ${R}_{a} = \sqrt{4 {\left({δ}_{D 1}-{δ}_{D 2}\right)}^{2} + 4 {\left({δ}_{P 1}-{δ}_{P 2}\right)}^{2} + 4 {\left({δ}_{H 1}-{δ}_{H 2}\right)}^{2}}$
*δ*_{*D*1} = Dispersive solubility parameter for Diesel = 14.51
*δ*_{*D*2} = Dispersive solubility parameter for a given end group (δ_{D})
*δ*_{*P*1} =Polar solubility parameter for Diesel = 3.18
*δ*_{*P*2} = Polar solubility parameter for a given end group (δ_{P})
*δ*_{*H*1} = H-bonding solubility parameter for Diesel = 5.97
*δ*_{*H*2} = H-bonding solubility parameter for a given end group (δ_{H)}

**Table 1. Diesel Compatibility of PU Polymers with 100% p-iPO and IPDI with various cap segments (MW= 2000)**

| Polymer # | End Capping Reagent | Calculated Hansen Solubility Parameters (MPa^{1/2}) for End Cap Segment and "End Cap" distance from "Diesel" (Ra) | | | | | Diesel compatibility (1 wt.%) |
|---|---|---|---|---|---|---|---|
| | | | | | | | Polyol MW=2000 |
| | | δ_{T} | δ_{D} | δ_{P} | δ_{H} | Ra | |
| Comp 1 | Methanol | 28.4 | 19.1 | 16 | 13.6 | 17.5 | NO |
| Comp 2 | 1-Propanol | 23.4 | 17.8 | 11.5 | 10 | 11.3 | NO |
| Comp 3 | 2-Propanol | 22.7 | 17.5 | 11.4 | 8.9 | 10.6 | NO |
| Comp 4 | 1-Butanol | 22.7 | 17.5 | 10.4 | 10 | 10.2 | NO |
| Comp 5 | 2-Butanol | 21.8 | 17.3 | 9.8 | 8.9 | 9.1 | NO |
| Comp 6 | Sec-Butanol | 21.7 | 17.2 | 10.1 | 8.5 | 9.1 | NO |
| EX. 1 | 1-Pentanol | 21.9 | 17.4 | 9.5 | 9.2 | 9.2 | YES |
| EX. 2 | 1-Hexanol | 21.1 | 17.2 | 8.9 | 8.4 | 8.2 | YES |
| EX. 3 | 1-octanol | 19.8 | 16.9 | 7.6 | 6.9 | 6.6 | YES |
| EX. 4 | Docosanol | 17.1 | 16.2 | 4.3 | 3.4 | 4.4 | YES |
| EX. 5 | Propylene glycol butyl ether | 20.9 | 17 | 9.2 | 8 | 8.1 | YES |
| Comp 7 | Dimethylamin e | 26.1 | 18.3 | 14.3 | 11.9 | 14.7 | NO |
| Comp 8 | Diethylamine | 23.1 | 17.3 | 12.2 | 9.3 | 11.1 | NO |
| Comp 9 | Di-n-butylamine | 20.8 | 16.9 | 9.3 | 7.7 | 8 | NO |
| Comp 10 | Di-isobutylamine | 19.7 | 16.5 | 8.8 | 6.1 | 6.9 | NO |
| Comp 11 | Dihexylamine | 19.7 | 16.7 | 8.1 | 6.6 | 6.6 | NO |
| EX. 6 | Diheptyamine | 19.3 | 16.6 | 7.8 | 6.1 | 6.2 | YES |
| EX. 7 | Dioctylamine | 18.6 | 16.5 | 6.8 | 5.4 | 5.4 | YES |
| EX. 8 | Didecylamine | 18.3 | 16.4 | 6.3 | 5 | 5 | YES |
| Comp 12 | Benzylamine | 26 | 20.2 | 12.4 | 10.7 | 15.4 | NO |
| Comp 13 | 1-butylamine | 25.6 | 18.1 | 13.2 | 12.4 | 13.9 | NO |
| Comp 14 | 1-octylamine | 21.9 | 17.4 | 9.9 | 8.8 | 9.3 | NO |
| Comp 15 | 1-dodecylamine | 20 | 17 | 8.1 | 6.8 | 7 | NO |
| Comp 16 | 1-Octadecylamin e | 18.6 | 16.6 | 6.5 | 5.2 | 5.4 | NO |

In accordance with the present invention, mono alcohol with alkyl chains greater than or equal to C5 and secondary amine with alkyl chains greater than or equal to C14 capping agents were compatible

**Table 2. Diesel Compatibility of PU Polymers synthesized with 100% p-iPO and MDI with various cap segments (MW= 2000)**

| Polymer # | End Capping Reagent | Calculated Hansen Solubility Parameters (MPa^{1/2}) for End Cap Segment and "End Cap" distance from "Diesel" (Ra) | | | | | Diesel compatibilit y (1 wt.%) |
|---|---|---|---|---|---|---|---|
| | | δ_{T} | δ_{D} | δ_{P} | δ_{H} | Ra | Polyol MW =2000 |
| Comp 17 | Methanol | 28.4 | 19.1 | 16 | 13.6 | 17.5 | NO |
| Comp 18 | 1-Butanol | 22.7 | 17.5 | 10. 4 | 10 | 10.2 | NO |
| EX. 9 | 1-Pentanol | 21.9 | 17.4 | 9.5 | 9.2 | 9.2 | YES |
| EX. 10 | Docosanol | 17.1 | 16.2 | 4.3 | 3.4 | 4.4 | YES |
| Comp.19 | Dimethylamine | 26.1 | 18.3 | 14. 3 | 11.9 | 14.7 | NO |
| Comp 20 | Dihexylamine | 19.7 | 16.7 | 8.1 | 6.6 | 6.6 | NO |
| EX. 11 | Diheptyamine | 19.3 | 16.6 | 7.8 | 6.1 | 6.2 | YES |
| EX. 12 | Didecylamine | 18.3 | 16.4 | 6.3 | 5 | 5 | YES |
| Comp 21 | 1-butylamine | 25.6 | 18.1 | 13. 2 | 12.4 | 13.9 | NO |
| Comp 22 | 1-Octadecylamine | 18.6 | 16.6 | 6.5 | 5.2 | 5.4 | NO |

In accordance with the present invention, mono alcohol with alkyl chains greater than or equal to C5 and secondary amine with alkyl chains greater than or equal to C14 capping agents were compatible.

## Claims

1. A method for preserving wood comprising:
contacting wood with a wood preservation composition comprising
a) a polyurethane polymer synthesized from
i) a polyol comprising >95% p-propylene oxide,
ii) an isocyanate, and
iii) a capping agent;
b) an organic solvent, wherein the organic solvent comprises diesel; and
c) at least one wood preservative active which is 4,5-dichloro-2-n-octyl-4-isothiazolin-3-one;
wherein the capping agent is selected from the group consisting of a mono alcohol with alkyl chains greater than or equal to C5 and a secondary amine with alkyl chains greater than or equal to C14 and mixtures thereof; and
further wherein the molecular weight of the polyol is greater than or equal to 2000.

2. The method of claim 1 wherein the polyol comprises 100% p-propylene oxide.

3. The method of claim 1 wherein the isocyanate is a diisocyanate.

4. A wood preservation composition comprising
a) a polyurethane polymer synthesized from
i) a polyol comprising >95% p-propylene oxide,
ii) an isocyanate, and
iii) a capping agent;
b) an organic solvent, wherein the organic solvent comprises diesel; and
c) at least one wood preservative active which is 4,5-dichloro-2-n-octyl-4-isothiazolin-3-one;
wherein the capping agent is selected from the group consisting of a mono alcohol with alkyl chains greater than or equal to C5 and a secondary amine with alkyl chains greater than or equal to C14 and mixtures thereof; and
further wherein the molecular weight of the polyol is greater than or equal to 2000.

5. The wood preservation composition of claim 4, wherein the polyol comprises 100% p-propylene oxide.

6. The wood preservation composition of claim 4, wherein the isocyanate is a diisocyanate.

## Patentansprüche

1. Holzschutzverfahren, umfassend:
Inkontaktbringen von Holz mit einer Holzschutzzusammensetzung, umfassend
a) ein Polyurethanpolymer, synthetisiert aus
i) einem Polyol, das > 95 % p-Propylenoxid umfasst,
ii) einem Isocyanat und
iii) einem Verkappungsmittel;
b) ein organisches Lösungsmittel, wobei das organische Lösungsmittel Diesel umfasst; und
c) mindestens ein Holzschutzmittel, bei dem es sich um 4,5-Dichlor-2-n-octyl-4-isothiazolin-3-on handelt;
wobei das Verkappungsmittel aus der Gruppe bestehend aus einem Monoalkohol mit Alkylketten größer als oder gleich C5 und einem sekundären Amin mit Alkylketten größer als oder gleich C14 und Mischungen davon ausgewählt ist; und
wobei ferner das Molekulargewicht des Polyols größer als oder gleich 2000 ist.

2. Verfahren nach Anspruch 1, wobei das Polyol 100 % p-Propylenoxid umfasst.

3. Verfahren nach Anspruch 1, wobei es sich bei dem Isocyanat um ein Diisocyanat handelt.

4. Holzschutzzusammensetzung, umfassend
a) ein Polyurethanpolymer, synthetisiert aus
i) einem Polyol, das > 95 % p-Propylenoxid umfasst,
ii) einem Isocyanat und
iii) einem Verkappungsmittel;
b) ein organisches Lösungsmittel, wobei das organische Lösungsmittel Diesel umfasst; und
c) mindestens ein Holzschutzmittel, bei dem es sich um 4,5-Dichlor-2-n-octyl-4-isothiazolin-3-on handelt;
wobei das Verkappungsmittel aus der Gruppe bestehend aus einem Monoalkohol mit Alkylketten größer als oder gleich C5 und einem sekundären Amin mit Alkylketten größer als oder gleich C14 und Mischungen davon ausgewählt ist; und wobei ferner das Molekulargewicht des Polyols größer als oder gleich 2000 ist.

5. Holzschutzzusammensetzung nach Anspruch 4, wobei das Polyol 100 % p-Propylenoxid umfasst.

6. Holzschutzzusammensetzung nach Anspruch 4, wobei es sich bei dem Isocyanat um ein Diisocyanat handelt.

## Revendications

1. Procédé de conservation du bois comprenant :
la mise en contact de bois avec une composition de conservation du bois comprenant
a) un polymère de polyuréthane synthétisé à partir de
i) un polyol comprenant > 95 % de p-oxyde de propylène,
ii) un isocyanate, et
iii) un agent de coiffage ;
b) un solvant organique, le solvant organique comprenant du diesel ; et
c) au moins un agent actif de conservation du bois qui est la 4,5-dichloro-2-n-octyl-4-isothiazolin-3-one ;
dans lequel l'agent de coiffage est choisi dans le groupe constitué par un monoalcool comportant des chaînes alkyle d'une longueur supérieure ou égale à C5 et une amine secondaire comportant des chaînes alkyle d'une longueur supérieure ou égale à C14 et leurs mélanges ; et
en outre dans lequel le poids moléculaire du polyol est supérieur ou égal à 2 000.

2. Procédé selon la revendication 1, dans lequel le polyol comprend 100 % de p-oxyde de propylène.

3. Procédé selon la revendication 1, dans lequel l'isocyanate est un diisocyanate.

4. Composition de conservation du bois comprenant
a) un polymère de polyuréthane synthétisé à partir de
i) un polyol comprenant > 95 % de p-oxyde de propylène,
ii) un isocyanate, et
iii) un agent de coiffage ;
b) un solvant organique, le solvant organique comprenant du diesel ; et
c) au moins un agent actif de conservation du bois qui est la 4,5-dichloro-2-n-octyl-4-isothiazolin-3-one ;
dans lequel l'agent de coiffage est choisi dans le groupe constitué par un monoalcool comportant des chaînes alkyle d'une longueur supérieure ou égale à C5 et une amine secondaire comportant des chaînes alkyle d'une longueur supérieure ou égale à C14 et leurs mélanges ; et
en outre dans lequel le poids moléculaire du polyol est supérieur ou égal à 2 000.

5. Composition de conservation du bois selon la revendication 4, dans laquelle le polyol comprend 100 % de p-oxyde de propylène.

6. Composition de conservation du bois selon la revendication 4, dans laquelle l'isocyanate est un diisocyanate.
